# EUROPÄISCHE PATENTSCHRIFT

(11) **EP 2 425 333 B1**
(45) Veröffentlichungstag und Bekanntmachung des Hinweises auf die Patenterteilung: **30.08.2017**
(21) Anmeldenummer: 10712347.3
(22) Anmeldetag: 30.03.2010
(51) Int. Cl.: G06F 9/445

(54) **VERFAHREN ZUR AKTUALISIERUNG VON SOFTWAREKOMPONENTEN**
METHOD TO UPDATE SOFTWARE COMPONENTS
MÉTHODE POUR METTRE À JOUR DES COMPOSANTS LOGICIELS

(30) Priorität: 27.04.2009 DE 102009018761
(43) Veröffentlichungstag der Anmeldung: 07.03.2012
(73) Patentinhaber: Bayerische Motoren Werke Aktiengesellschaft, 80809 München (DE)
(72) Erfinder: SCHNITZLER, Moritz, 81249 Muenchen (DE); KRUEGER, Uwe, 85540 Haar (DE); SMIRNOV, Mikhail, 85774 Unterföhring (DE)
(74) Vertreter: Kammermeier, Peter Frank
(86) Internationale Anmeldenummer: PCT/EP2010/001991
(87) Internationale Veröffentlichungsnummer: WO 2010/124775

(56) Entgegenhaltungen:
- DE-A1-102008 036 711
- US-A- 5 442 553
- US-A1- 2009 119 657
- US-B1- 6 820 259

## Beschreibung

Die Erfindung betrifft ein Verfahren zur Aktualisierung zumindest einer Softwarekomponente eines Kraftfahrzeugs, umfassend zumindest die Schritte: Ermittlung von Fahrzeugkonfigurationsinformation, die zumindest die Information umfasst, welche Hardwarekomponenten und/oder welche Softwarekomponenten im konkreten Kraftfahrzeug vorhanden sind, durch eine Zustandsermittlungs-Vorrichtung; Bereitstellen einer Telekommunikationsverbindung zwischen einer fahrzeuginternen Service-Schnittstelle und einer fahrzeugexternen Service-Einrichtung; Versenden der von der Zustandsermittlungs-Vorrichtung ermittelten Fahrzeugkonfigurationsinformation sowie von Identifikationsdaten des betreffenden Kraftfahrzeugs vom Kraftfahrzeug über die Telekommunikationsverbindung an die fahrzeugexterne Service-Einrichtung; Prüfung anhand der Fahrzeugkonfigurationsinformation durch die fahrzeugexterne Service-Einrichtung, ob eine oder mehrere Softwarekomponenten gemäß einer bei der fahrzeugexternen Service-Einrichtung verfügbaren Kontrollvorschrift zu aktualisieren ist; Bereitstellen einer entsprechenden Aktualisierungsvorschrift durch die fahrzeugexterne Service-Einrichtung und Aktualisierung der zu aktualisierenden Softwarekomponente anhand der Aktualisierungsvorschrift.

Kraftfahrzeuge gemäß dem heutigen Stand der Technik enthalten eine Vielzahl elektronischer Steuergeräte, die neben Hardwarekomponenten auch Softwareanteile bzw. Softwarekomponenten umfassen. Kraftfahrzeuge haben heute eine durchschnittliche Lebensdauer von mehreren Jahren. Über diesen Zeitraum, auch als Kraftfahrzeuglebenszyklus bezeichnet, sind aufgrund von technischen Veränderungen Eingriffe in die Softwareanteile erforderlich, insbesondere der Austausch, die Ergänzung oder Erweiterung von Software, d. h. von bestimmten Softwarebausteinen oder softwarebasierten Funktionen. Solche Eingriffe werden im Folgenden als Aktualisierungen von Softwarekomponenten bezeichnet. Sofern nötig, lassen sich einzelne Aktualisierungsmaßnahmen unterscheiden in Updates, bei denen der bereits zuvor spezifizierte Funktionsumfang in der Regel im Wesentlichen erhalten bleibt, und in Upgrades, bei denen der spezifizierte Funktionsumfang in der Regel erweitert wird, also eine Funktionsmehrung eintritt. Einen möglichen Anlass für die Notwendigkeit eines Updates/Upgrades können beispielsweise veränderte Anforderungen im Hinblick auf die Verbindung zu externen Geräten, insbesondere Zubehörgeräten, darstellen. Mit der Aktualisierung von Softwarekomponenten einher geht in der Regel eine Veränderung von Konfigurationsdaten des Kraftfahrzeugs.

Aus dem Stand der Technik, beispielsweise aus der WO 2007/098781 A1 und der US 6,820,259 B1, sind bereits Verfahren zur Durchführung einer Aktualisierung von Softwarekomponenten bei Kraftfahrzeugen, insbesondere Verfahren der eingangs genannten Art bekannt. Die aus dem Stand der Technik bekannten Verfahren weisen jedoch noch erhebliche Nachteile auf im Hinblick auf den Gesamtaufwand, der zu betreiben ist, um alle Kraftfahrzeuge, bei denen eine bestimmte Aktualisierungsmaßnahme vorgenommen werden sollte, einfach und effizient über diese Tatsache in Kenntnis zu setzen und eine als erforderlich erachtete Aktualisierungsmaßnahme einfach, sicher und aufwandsarm durchzuführen.

Es ist eine Aufgabe der Erfindung, ein einfaches und sicheres Verfahren mit geringem Gesamtaufwand zur Aktualisierung von Softwarekomponenten in Kraftfahrzeugen zu schaffen.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Erfindungsgemäß ist die eigentliche Aktualisierung einer zu aktualisierenden Softwarekomponente ausschließlich durch den Fahrer des Kraftfahrzeugs freigebbar. Um den Fahrer zu einer entsprechenden Freigabe zu bewegen, wird die Aktualisierung der zu aktualisierenden Softwarekomponente dem Fahrer von der fahrzeugexternen Service-Einrichtung vor ihrer Durchführung angeboten. Dies kann beispielsweise durch die Übermittlung einer elektronischen Nachricht ins Fahrzeug und deren Anzeige im MMI (Mensch-Maschine-Interface) des Kraftfahrzeugs erfolgen. Die Freigabe kann dann durch eine Bestätigungshandlung des Fahrers erteilt werden, beispielsweise die Auswahl einer Bestätigungsantwort (z.B. "OK." oder "Aktualisierung starten."), die dem Fahrer gleichzeitig mit der übermittelten Nachricht im MMI angezeigt wird. Ganz im Gegensatz zur ausschließlich vom Fahrer freigebbaren Aktualisierung findet erfindungsgemäß das Versenden der Fahrzeugkonfigurationsinformation sowie der Identifikationsdaten wiederholt und ohne Mitwirkung und/oder Benachrichtigung des Fahrers zeitgesteuert und/oder ereignisgesteuert statt.

Mit anderen Worten werden umfangreiche Maßnahmen zur Vorbereitung der eigentlichen Aktualisierung vom Fahrer unbemerkt getroffen, ehe die Freigabe des Fahrers für die Durchführung der eigentlichen Aktualisierung eingeholt wird. Der Fahrer behält somit die Kontrolle über Software-Aktualisierungen, da die eigentliche Aktualisierung erst auf seine Freigabe hin vorgenommen wird. Gleichzeitig wird der Fahrer jedoch nicht durch Nachrichten, Hinweise und/oder Aufforderungen betreffend das Versenden der Fahrzeugkonfigurationsinformation sowie der Identifikationsdaten behelligt, da dieses aus seiner Sicht unauffällig "im Hintergrund" und ohne sein Zutun erfolgt. Der Gesamtaufwand im Hinblick auf Aktionen und/oder Notifikationen des Fahrers wird durch die Erfindung reduziert.

Das erfindungsgemäße Verfahren beruht auf einer teilweisen Abkehr von der im Stand der Technik gemeinhin unangetasteten Herangehensweise, dem Fahrer die Hoheit über den Datenverkehr zwischen seinem Fahrzeug und der fahrzeugexternen Service-Einrichtung zu überlassen. Diese Abkehr geht jedoch nur soweit, dass Angaben zur Fahrzeugkonfiguration und Fahrzeugidentifikation an die Service-Einrichtung übertragen werden, damit diese individuelle Aktualisierungsmaßnahmen für das betreffende Fahrzeug planen und vorschlagen kann. Funktionsbeteiligte Softwarekomponenten des Kraftfahrzeugs werden vorzugsweise nicht ohne Zutun des Fahrers verändert, entfernt und/oder hinzugefügt.

Unter der Mitwirkung des Fahrers ist im Rahmen dieses Dokuments, sofern nicht anders erwähnt, eine Mitwirkung im Einzelfall, d.h. bei jedem einzelnen Versendevorgang, zu verstehen. An späterer Stelle wird verdeutlicht werden, dass die Notwendigkeit einer einmaligen Mitwirkung des Fahrers, z.B. in Form einer MMI-gesteuerten Aktivierung eines Dienstes, durch welche dann eine Vielzahl von Versendevorgängen ausgelöst wird, durchaus zweckmäßig sein kann.

Um Datenschutzanforderungen gerecht zu werden, wird das Versenden der Fahrzeugkonfigurationsinformation sowie der Identifikationsdaten vorzugsweise über eine abgesicherte Verbindung bzw. in verschlüsselter Form vorgenommen.

Um noch weiter gehenden Datenschutzanforderungen gerecht zu werden, können die Fahrzeugkonfigurationsinformation sowie die Identifikationsdaten bei der fahrzeugexternen Service-Einrichtung nach ihrer Verarbeitung umgehend (oder nach Ablauf einer vorgegebenen Zeitspanne) selbsttätig gelöscht werden. Die Erfindung erlaubt eine individuelle Prüfung jedes sich bei der fahrzeugexternen Service-Einrichtung anmeldenden (und seine Fahrzeugkonfigurationsinformation sowie Identifikationsdaten sendenden) Fahrzeugs auf die Erforderlichkeit von Software-Updates und/oder -Upgrades und eine individuelle Durchführung der tatsächlich erforderlichen Updates/Upgrades. Eine hierzu vergleichbare Servicequalität ist durch flottenbasierte Prüf- und Notifizierungsmaßnahmen nicht erreichbar. Der auf den ersten Blick als nachteilig (oder gar einer praktischen Umsetzung im Wege stehend) erscheinende Datenverkehr zur wiederholten Übersendung der Fahrzeugkonfigurationsinformation an die fahrzeugexterne Service-Einrichtung wird durch die Vorteile des Verfahrens aufgewogen und kann gegebenenfalls durch geeignete Datenauswahl und/oder geeignete Datenvorverarbeitung und/oder ein aufeinander abgestimmtes Sende-Timing der Einzelfahrzeuge einer Fahrzeugflotte auf ein sinnvolles Maß begrenzt werden. Mit dem Verfahren einhergehende Mehrkosten werden zumindest teilweise durch verminderte Gewährleistungskosten und gesteigerte Kundenzufriedenheit kompensiert.

Die Fahrzeugkonfigurationsinformation umfasst, gegebenenfalls in Listenform, vorzugsweise Angaben einer oder mehrerer der folgenden Kategorien:
- Angaben betreffend die im Fahrzeug aktuell und/oder ursprünglich verbauten Hardwarekomponenten,
- Angaben betreffend die im Fahrzeug aktuell und/oder ursprünglich vorhandenen Softwarekomponenten,
- Zuordnungen zwischen den im Fahrzeug aktuell und/oder ursprünglich verbauten Hardwarekomponenten und den im Fahrzeug aktuell und/oder ursprünglich vorhandenen Softwarekomponenten.

Die Identifikationsdaten umfassen vorzugsweise zumindest eine eindeutige Fahrzeugidentifikationsnummer, beispielsweise die Fahrgestellnummer. Auch andere Angaben zur Herkunft des Fahrzeugs, insbesondere Angaben betreffend Hersteller, Modell, Herstellungszeitpunkt und/oder-zeitraum, Charge etc. sind denkbar, ebenso ein so genannter Fahrzeugauftrag, d.h. eine Fahrzeugbeschreibung bzw. ein entsprechender Produktionsauftrag.

Es kann jedoch alternativ oder zusätzlich auch ein speziell für Fernwartungsdienste vergebener Bezeichner, beispielsweise ein hierfür vergebener Benutzername, verwendet werden.

Neben der Fahrzeugkonfigurationsinformation sowie den Identifikationsdaten können weitere Fahrzeugdaten, insbesondere Fehlerspeicherinhalte und/oder wartungsrelevante Fahrzeugdaten und/oder betriebsrelevante Fahrzeugdaten und/oder sicherheitsrelevante Fahrzeugdaten und/oder die Nutzung softwarebasierter Funktionen des Kraftfahrzeugs betreffende Fahrzeugdaten, an die fahrzeugexterne Service-Einrichtung übertragen werden.

Die Fahrzeugkonfigurationsinformation kann fahrzeugseitig dahingehend automatisch vorverarbeitet werden, dass sie komprimiert wird und/oder auf potenziell für Software-Aktualisierungen relevante Informationen reduziert wird. So kann die zu übertragende Datenmenge reduziert werden bzw. es kann bei gleicher Gesamtdatenmenge häufiger Fahrzeugkonfigurationsinformation an die fahrzeugexterne Service-Einrichtung gesendet werden.

Die automatische Vorverarbeitung kann fahrzeugseitig beispielsweise durch die Zustandsermittlungs-Vorrichtung, alternativ aber auch durch eine andere Recheneinheit des Fahrzeugs, anhand einer Komprimierungs- und/oder Filtervorschrift vorgenommen werden. Eine solche Komprimierungs- und/oder Filtervorschrift kann dauerhaft beim Fahrzeug hinterlegt sein, kann aber auch von der fahrzeugexternen Service-Einrichtung ins Kraftfahrzeug übertragen werden.

Es kann auch eine automatische Vorverarbeitung dahingehend stattfinden, dass nur Veränderungen, gewissermaßen ein Inkrement bzw. Delta, gegenüber einer früheren Fahrzeugkonfiguration bestimmt und an die fahrzeugexterne Service-Einrichtung übertragen wird. Die Fahrzeugkonfigurationsinformation betreffend die frühere Fahrzeugkonfiguration bleibt dann vorzugsweise bei der fahrzeugexternen Service-Einrichtung gespeichert und wird dem übertragenen Inkrement bzw. Delta anhand der Identifikationsdaten oder anhand eigens mitgesendeter Zuordnungsdaten zugeordnet. Auch auf diese Weise kann die zu übertragende Datenmenge erheblich reduziert werden bzw. es kann bei gleicher Gesamtdatenmenge häufiger Fahrzeugkonfigurationsinformation an die fahrzeugexterne Service-Einrichtung gesendet werden.

Eine weitere Möglichkeit zur erheblichen Reduktion der im Einzelfall zu übertragenden Datenmenge besteht darin, lediglich einen für eine bestimmte Fahrzeugkonfiguration eindeutigen Identifikations-Code zu bestimmen und zu übertragen, insbesondere eine so genannte Hash-Summe. Insbesondere in Fällen, in welchen eine bestimmte Fahrzeugkonfiguration bereits zu einem früheren Zeitpunkt vollständig zu der fahrzeugexternen Service-Einrichtung übertragen worden ist und gegebenenfalls auch bereits bei der fahrzeugexternen Service-Einrichtung auf Basis dieser Fahrzeugkonfiguration eine Prüfung auf Aktualisierungbedarf vorgenommen worden und/oder eine Aktualisierungvorschrift bereitgestellt worden ist (jedoch die Aktualisierung gemäß der Aktualisierungvorschrift noch nicht voergenommen worden ist), kann der zukünftige Verfahrensaufwand beispielsweise folgendermaßen reduziert werden: Es kann zunächst sowohl fahrzeugseitig als auch seitens der fahrzeugexternen Service-Einrichtung ein diese Fahrzeugkonfiguration eindeutig kennzeichnender Identifikations-Code, z.B. die Hash-Summe über die übertragene Fahrzeugkonfiguration, abgelegt werden. Der seitens der fahrzeugexternen Service-Einrichtung abgelegte Identifikations-Code kann wahlweise auch nicht die eigentliche Fahrzeugkonfiguration betreffen, sondern die auf ihrer Basis bereitgestellte Aktualisierungsvorschrift. In der Folge kann dann statt einer neuerlichen Übertragung der gesamten Fahrzeuginformation (bzw. statt einer neuerlichen Prüfung auf Aktualisierungbedarf und/oder einer neuerlichen Bereitstellung einer Aktualisierungvorschrift) lediglich ein Abgleich der beiderseitigen Identifikations-Codes vorgenommen werden. Solange die beiderseitigen Identifikations-Codes unverändert bleiben, sind keine zusätzlichen Maßnahmen erforderlich. Ändert sich jedoch der vom Fahrzeug übertragene Identifikations-Code infolge einer Veränderung der Fahrzeugkonfiguration, muss entsprechend neue (ausführliche bzw. vollständige) Fahrzeugkonfigurationsinformation zur fahrzeugexternen Service-Einrichtung übertragen werden. Ändert sich der bei der fahrzeugexternen Service-Einrichtung abgelegte Identifikations-Code, z.B. infolge der Neuverfügbarkeit eines bestimmten Updates/Upgrades, muss zumindest eine neue Prüfung auf Aktualisierungbedarf und/oder eine neuerliche Bereitstellung einer Aktualisierungvorschrift erfolgen.

Ein bevorzugtes Beispiel der erfindungsgemäß ermittelten und übertragenen Fahrzeugkonfigurationsinformation stellt daher eine über die jeweilige Fahrzeugkonfiguration berechnete Hash-Summe dar, welche diese Fahrzeugkonfiguration eindeutig kennzeichnet.

Das Versenden der Fahrzeugkonfigurationsinformation sowie der Identifikationsdaten findet zeitgesteuert und/oder ereignisgesteuert wiederholt statt.

Eine Zeitsteuerung erlaubt es beispielsweise, einen maximalen Zeitverzug zwischen der Verfügbarkeit einer neuen Softwarekomponente bei der fahrzeugexternen Service-Einrichtung und einem entsprechenden Aktualisierungsangebot an den Fahrer zu gewährleisten.

Eine Zeitsteuerung erlaubt es zudem, den Datenverkehr einer Vielzahl von Kraftfahrzeugen derart zu koordinieren, dass bestimmte Grenzwerte handhabbarer Datenmengen nicht überschritten werden. Hierzu kann das Versenden der Fahrzeugkonfigurationsinformation für jedes Fahrzeug aus einer Vielzahl von Kraftfahrzeugen periodisch erfolgen, wobei die Sendezeitpunkte der einzelnen Fahrzeuge innerhalb der Periode möglichst gleichmäßig verteilt werden. Die Festlegung der Periode und/oder der Sendezeitpunkte kann durch eine werksseitige und/oder eine nachträgliche Konfiguration des Fahrzeugs bewerkstelligt werden. Zur Einhaltung eines vorgegebenen "Zeitplans" verfügt das Kraftfahrzeug vorzugsweise über eine Uhr und/oder einen Timer. Eine eventuelle nachträgliche, d.h. nicht werksseitige, Konfiguration des zeitlichen Sendeverhaltens des Kraftfahrzeugs kann entweder vor Ort in einem Servicebetrieb oder über eine drahtlose Verbindung von einer zentralen Servicestelle aus vorgenommen werden. Die zentrale Servicestelle kann dabei die bereits genannte fahrzeugexterne Service-Einrichtung sein. Die drahtlose Verbindung kann dieselbe sein, die auch für die Übertragung der Konfigurationsinformation und Identifikationsdaten und/oder für die Übertragung von Updates/Upgrades ins Kraftfahrzeug verwendet wird.

Vorzugsweise ist das Versenden der Fahrzeugkonfigurationsinformation sowie der Identifikationsdaten von der zentralen Servicestelle, die insbesondere die bereits genannte fahrzeugexterne Service-Einrichtung sein kann, auch vollständig deaktivierbar bzw. aktivierbar.

Eine Ereignissteuerung erlaubt es im Gegensatz zu einer Zeitsteuerung insbesondere, zeitnah auf bestimmte Ereignisse zu reagieren.

Als auslösendes Ereignis kann beispielsweise die fahrzeugseitige Erkennung einer Veränderung an einer Hard- und/oder Softwarekomponente des Kraftfahrzeugs definiert werden. So kann beispielsweise nach einem Steuergeräteaustausch in einer Werkstätte, die nicht über geeignete Programmiermittel verfügt, dem Fahrer angeboten werden, die für den sicheren Fahrzeugbetrieb erforderliche Software "over the air" von der fahrzeugexternen Service-Einrichtung ins Fahrzeug zu laden.

Als auslösendes Ereignis kann auch der erstmalige und/oder wiederholte Anschluss eines bestimmten Zubehörgeräts, insbesondere eines Mobiltelefons, eines Audio-/Video-Players oder eines tragbaren Computers, an das Kraftfahrzeug definiert werden. Es kann dem Fahrer dann zeitnah angeboten werden, die für das Zubehörgerät geeigneten Treiber- und/oder Integrationssoftwarekomponenten ins Fahrzeug zu laden.

Als auslösendes Ereignis kann auch das Überschreiten einer bestimmten Laufleistungsgrenze und/oder eine Betankung des Fahrzeugs definiert werden. So kann sichergestellt werden, dass insbesondere vielgenutzte Fahrzeuge bevorzugt Aktualisierungsangebote erhalten.

Als auslösendes Ereignis kann auch das Überschreiten einer Landesgrenze oder die Annäherung an eine Landesgrenze definiert werden. So kann sichergestellt werden, dass Updates/Upgrades, die für ein bestimmtes Land besonders geeignet und/oder vorgeschrieben sind, dem Fahrer rechtzeitig angeboten werden.

Als auslösendes Ereignis kann auch die Wiederinbetriebnahme des Kraftfahrzeugs nach längerer Nichtnutzung definiert werden und/oder die Wiederherstellung der drahtlosen Erreichbarkeit durch die fahrzeugexterne Service-Einrichtung nach längerer Unterbrechung dieser Erreichbarkeit. So kann dem Fahrer eines beispielsweise für längere Zeit in einer Tiefgarage abgestellten Fahrzeugs bei der Wiederaufnahme der Fahrzeugnutzung schnellstmöglich angeboten werden, sein Fahrzeug auf den neuesten Software-Stand zu bringen.

Als auslösendes Ereignis kann auch die fahrzeugseitige Erkennung einer, beispielsweise über ein MMI kommandierten Aktualisierungsanforderung des Fahrers, definiert werden. Gemäß einer alternativen Ausführungsform der vorliegenden Erfindung ist die Möglichkeit der Kommandierung einer solchen Aktualisierungsanforderung durch den Fahrer jedoch bewusst nicht vorgesehen, um den Fahrer vollständig von Gedanken über die Notwendigkeit von Softwareaktualisierungen zu befreien.

Als auslösendes Ereignis kann gegebenenfalls sogar der Empfang eines von der fahrzeugexternen Service-Einrichtung oder von einer anderen Service-Einrichtung versendeten fahrzeugindividuellen Triggersignals definiert sein. Auf diesem Wege könnte die fahrzeugexterne Service-Einrichtung oder eine andere Service-Einrichtung - vorbehaltlich einer Reaktion der getriggerten Fahrzeuge - steuern, welche Fahrzeuge zu welchem Zeitpunkt auf die Verfügbarkeit von Software-Aktualisierungen geprüft werden sollen. Besonders vorteilhaft erscheint es, die Voraussetzungen dafür zu schaffen, dass die fahrzeugexterne Steuereinrichtung einen fahrzeugindividuellen Trigger aussenden kann, der beim Fahrzeug zur sofortigen oder späteren Überprüfung von Updates/Upgrades führt, genau dann, wenn ein mit dem Fahrzeug zuzuordnender Kunde in einem (Online-)Software-Shop eine Applikation, einen Content, einen Dienst oder ein Feature kostenfrei oder kostenpflichtig bestellt hat, das danach in das Fahrzeug übertragen, dort freigeschaltet oder aber im Fahrzeug nutzbar gemacht werden soll (Upgrade Fall). Gemäß einer alternativen Ausführungsform der vorliegenden Erfindung ist die Möglichkeit der Auslösung einer Aktualisierung durch fahrzeugexterne Service-Einrichtungen jedoch bewusst nicht vorgesehen, um den logistischen Aufwand bei der fahrzeugexternen Service-Einrichtung zu minimieren. Im Extremfall muss dann bei der fahrzeugexternen Service-Einrichtung keinerlei Wissen darüber vorliegen, welche Fahrzeuge sich mit ihr in Verbindung setzen könnten, um die Verfügbarkeit einer Softwareaktualisierung zu prüfen. Ohne solches Vorwissen ist selbstverständlich auch keine Notifizierung der Fahrzeuge seitens der fahrzeugexternen Service-Einrichtung möglich.

Auch datenschutzrechtliche Bedenken, die eventuell bestehen könnten angesichts des vom Fahrer unbemerkten Versendens der Fahrzeugkonfigurationsinformation bzw. Identifikationsdaten an die fahrzeugexterne Service-Einrichtung, sind insbesondere dann unbegründet, wenn diese Daten nicht bzw. nicht lange über einen konkreten, individuellen Aktualisierungsvorgang hinaus bei der fahrzeugexterne Service-Einrichtungen gespeichert werden.

Vorzugsweise ist das Versenden der Fahrzeugkonfigurationsinformation sowie der Identifikationsdaten - auch dann, wenn es ereignisgesteuert erfolgt - von einer zentralen Servicestelle vollständig deaktivierbar bzw. aktivierbar.

Alternativ oder zusätzlich kann das Versenden der Fahrzeugkonfigurationsinformation sowie der Identifikationsdaten auch durch den Fahrer des Kraftfahrzeugs vollständig deaktivierbar bzw. aktivierbar sein, beispielsweise durch Deaktivierung bzw. Aktivierung eines entsprechenden Dienstes. Das wiederholte Versenden der Fahrzeugkonfigurationsinformation sowie der Identifikationsdaten kann also insbesondere aufgrund einer einmaligen - oder zumindest gegenüber dem wiederholten Versenden mit deutlich geringerer Wiederholrate vorzunehmenden (z.B. täglich/wöchentlicht/monatlich/jährlich neu zu aktivierender Dienst) - MMI-gesteuerten Mitwirkung des Fahrers stattfinden.

Die Ermittlung von Fahrzeugkonfigurationsinformation durch die Zustandsermittlungs-Vorrichtung kann in an sich bekannter Weise erfolgen. Auch das Bereitstellen der drahtlosen Telekommunikationsverbindung zwischen der fahrzeuginternen Service-Schnittstelle und der fahrzeugexternen Service-Einrichtung kann in an sich bekannter Weise erfolgen, ebenso wie das Versenden der Fahrzeugkonfigurationsinformation und der Identifikationsdaten an die fahrzeugexterne Service-Einrichtung und die bei der fahrzeugexternen Service-Einrichtung ablaufende Prüfung, ob eine oder mehrere Softwarekomponenten gemäß einer dort verfügbaren Kontrollvorschrift zu aktualisieren ist. Letztere Prüfung kann bei dem erfindungsgemäßen Verfahren beispielsweise derjenigen Prüfung entsprechen, die auch bei bekannten Werkstattprogrammiersystemen für die Aktualisierung einzelner Softwarekomponenten Verwendung findet.

Das Bereitstellen einer entsprechenden Aktualisierungsvorschrift durch die fahrzeugexterne Service-Einrichtung und die Aktualisierung der zu aktualisierenden Softwarekomponente anhand der Aktualisierungsvorschrift erfolgt vorzugsweise, indem bestimmte Software-Update-Packages bzw. Software-Upgrade-Packages bestimmt werden, indem ein Titel jedes Packages, gegebenenfalls zusammen mit einer kurzen Beschreibung des Packages ans Fahrzeug übertragen und dort dem Fahrer als verfügbar und geeignet zur Anzeige gebracht wird, und indem auf eine Freigabe des Fahrers hin und/oder auf eine Auswahl einzelner von mehreren angebotenen Packages mit nachfolgender Freigabe hin diese Packages zum Fahrzeug übertragen und dort installiert werden.

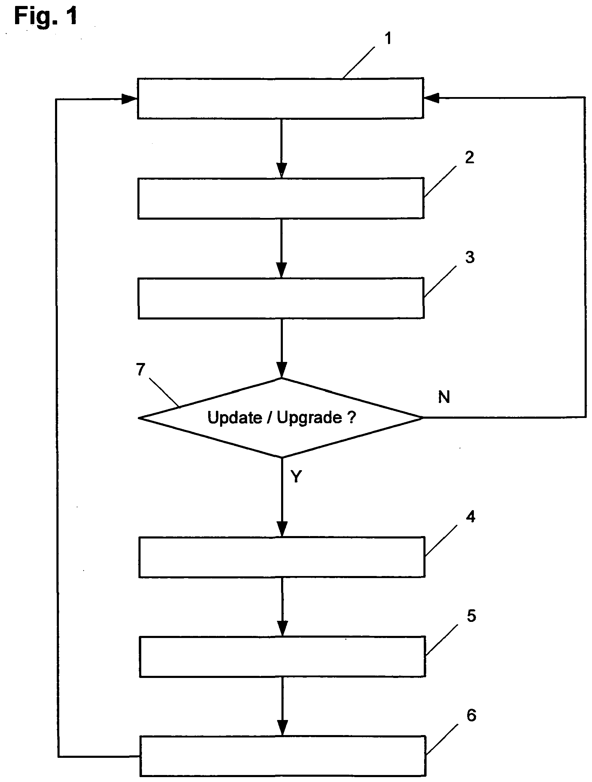

Im Folgenden wird anhand der einzigen beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch
- Fig. 1: ein Ablaufdiagramm der Verfahrensschritte eines exemplarischen Dienstes auf Basis der Erfindung.

Gemäß dem aktuell in Anwendung befindlichen Stand der Technik werden softwarebasierte Updates bzw. Upgrades bei Kraftfahrzeugen durch verschiedene technische Lösungen durchgeführt.

Bekannt sind unter anderem die folgenden Systeme und Verfahren:
a) Werkstattprogrammiersysteme: Zur Durchführung eines Updates bzw. Upgrades wird das Kraftfahrzeug kabelgebunden oder kabellos über ein lokales Kommunikationsnetz an ein Werkstattsystem angebunden, über welches die Programmierung des Kraftfahrzeugs vorgenommen wird. Hierbei prüft das Werkstattsystem durch gezielte Diagnoseabfragen, die an das Kraftfahrzeug gesendet werden, welcher Softwarestand vorliegt. Aufgrund von bereits vorliegenden Informationen wird dann im System selbst oder auf Basis einer Kommunikation über ein (Wide Area) Kommunikationsnetz mit einem zentralen System beim Hersteller überprüft, ob für dieses Kraftfahrzeug Software-Updates/Upgrades vorliegen. Im Fall einer positiven Prüfung übernimmt das Werkstattsystem (Off-Board) die Programmierung des Kraftfahrzeugs. Als Schnittstelle zum Kraftfahrzeug fungieren spezielle Programmier- und Diagnose-Interfaces. Bekannt sind Werkstattprogrammiersysteme für die Programmierung des Gesamt-Kraftfahrzeugs, aber auch für die Aktualisierung einzelner Softwarekomponenten.
b) CD/DVD-basierte Systeme: Einzelne Steuergeräte in Kraftfahrzeugen (z.B. so genannte Headunits, also das zentrale Navigations-/Entertainmentsystem) bzw. dedizierte Programmteile in den Steuergeräten können auch durch eine spezielle Programmier-CD/DVD programmiert werden. Dazu werden in der Regel die vorhandenen CD/DVD-Einzugschächte benutzt. Bekannt sind insbesondere CD/DVD-basierte Systeme zur Programmierung der Firmware des Navigationssystems eines Kraftfahrzeugs.
c) USB-basierte Systeme: Einzelne Steuergeräte in Kraftfahrzeugen (z.B. Headunits oder aber auch Telefon-/Kommunikationssteuergeräte) bzw. dedizierte Programmteile in den Steuergeräten können auch durch Software programmiert werden, die sich auf einem externen Speichermedium befindet, der über einen USB-Anschluss mit dem Kraftfahrzeug verbunden wird. Auf ein solches Speichermedium muss die Software zuvor heruntergeladen werden, z.B. via Internet und Home-PC. Dazu werden die vorhandenen USB-Schnittstellen im Kraftfahrzeug benutzt. Bekannte Beispiele für die Anwendung solcher USB-basierter Systeme sind die Aktualisierung einer Treiber-Software für eine Telefonsteuerung, die Aktualisierung von Applikationen für die Headunit und die Aktualisierung von Kartendaten eines Navigationssystems.

Bei den genannten Verfahren und Systemen (Werkstattprogrammiersysteme, CD/DVD-basierte Systeme, USB-basierte Systeme) werden
- entweder Kraftfahrzeugkonfigurationsdaten bzw. Kraftfahrzeugzustandsdaten von einer zentralen Einheit aus, aus dem Kraftfahrzeug abgefragt um einen anschließenden Vergleich über mögliche Software-Updates/Upgrades durchzuführen (insbesondere so gehandhabt bei Werkstattprogrammiersystemen)
- oder aber es wird eingeschränkt oder überhaupt nicht geprüft, ob die aktuell im Kraftfahrzeug vorhandene Kraftfahrzeugsoftware kompatibel zu den Software Updates/Upgrades ist, da einfach die bestehende Software überschrieben wird. (insbesondere so gehandhabt bei CD/DVD-basierten Systemen und USB-basierten Systemen).

In den Fällen, in denen im Laufe des Lebenszyklus eines Kraftfahrzeugs eine Software oder Hardware aus betriebstechnischen Gründen oder aufgrund von nach Inverkehrbringen identifizierten funktionalen Fehlern einem Update unterzogen oder ausgetauscht werden muss, wird in Automobil-Fachkreisen auch von einer technischen Aktion (TA) gesprochen. Bei solchen TA wird meist über ein zentrales System, in dem alle Daten von bereits produzierten Kraftfahrzeugen enthalten sind, ein Abgleich durchgeführt, welche Kraftfahrzeuge von einem notwendigen Software-Update oder aber von einem Hardware-Tausch betroffen sind. Es kann dann ein Abgleich der Kraftfahrzeugdaten mit den Kundendaten vorgenommen werden, so dass der Fahrer über die TA informiert werden kann. Es kann aber alternativ oder zusätzlich auch eine Liste der relevanten Kraftfahrzeuge erstellt werden, für die eine TA beim nächsten Werkstattbesuch durchgeführt werden soll. Es kann auch bei der Diagnose des Kraftfahrzeugs in der Werkstatt ermittelt werden, ob es für dieses Kraftfahrzeug einen neuen Softwarestand gibt (siehe obige Beschreibung von Werkstattprogrammiersystemen). Die WO 2007/098781 A1 beschreibt ein Telematik-System bzw. Tele-Programmierungssystem, das eine Online-Verbindung des Kraftfahrzeugs mit einer zentralen Infrastruktur über ein vorzugsweise drahtloses Kommunikationsnetz erlaubt. Im Rahmen von technische Aktionen könnten bei einem solchen System relevante Kraftfahrzeuge mittels einer elektronischen Nachricht darüber informiert werden, dass für sie eine Softwareaktualisierung oder aber ein Hardware-Tausch vorgenommen werden muss. Auf Grundlage eines solchen Telematik-Systems bzw. Tele-Programmierungssystems kann ein notwendiges Software-Update oder ein vom Kunden gewolltes Software-Upgrade über das drahtlose Kommunikationsnetz vorgenommen werden - in an sich vergleichbarer Art und Weise wie dies Stand der Technik für Mobiltelefone und Computer ist.

Werkstattprogrammiersysteme besitzen insbesondere die Nachteile,
- dass eine Aktualisierung des Software-Stands einen Werkstattaufenthalt des Kraftfahrzeugs erfordert, der mit entsprechenden Kosten (Werkstattbelegung, Nutzungsausfall für Fahrer, Ersatzfahrzeug) verbunden ist und
- dass der Fahrer den Update-Prozess nicht selbst beeinflussen kann, sondern alleine die Werkstatt entscheidet, was aktualisiert wird.

CD/DVD-basierten Systemen und USB-basierten Systemen besitzen insbesondere die Nachteile,
- dass zum Zeitpunkt der Bereitstellung eines Software-Updates in der Regel keine aktuelle Kraftfahrzeugkonfigurationsinformation zur Verfügung steht, weshalb ein bereitgestelltes Software-Update entweder eine - unter Umständen sehr komplexe Kompatiblitätsbeschreibung mitführen muss oder gar - in Zweifelsfällen - aufgrund fehlender Informationen über die aktuell im Fahrzeug vorhandene Hard- und Software kein Update durchgeführt werden kann, obwohl ein bereitgestelltes Update eigentlich kompatibel wäre, und
- dass der Fahrer ein Update nicht eigenständig und direkt vom Kraftfahrzeug aus durchführen kann, sondern das Software-Update/Upgrade erst "auf Umwegen" (z.B. Erwerb einer CD/DVD bzw. Download per PC) abholen und ins Kraftfahrzeug bringen muss.

Sowohl Werkstattprogrammiersysteme als auch CD/DVD-basierte Systeme und USB-basierte Systeme besitzen die Nachteile,
- dass Software Updates nur verzögert ins Kraftfahrzeug eingebracht werden (Wartungsaufenthalt des Kraftfahrzeugs, Kunde informiert sich selbst über verfügbare Updates, Information per Post / E-Mail),
- dass für eine zeitnahe Information des Fahrers über eine softwarebasierte TA relevante Kraftfahrzeuge aufwändig (Erstellung und Verwaltung von Listen) aus verfügbaren Daten ermittelt werden müssen,
- dass für eine eventuelle Benachrichtigung (per Post oder per E-Mail) des Fahrers über ein Software-Update zusätzliche Kosten und zusätzlicher Aufwand entstehen (Porto, Verwaltung, Kundeninformation) und
- dass Fahrer von Kraftfahrzeugen, die mittlerweile, gegebenenfalls auf alternativem Wege und ohne das Wissen der zuständigen fahrzeugexternen Service-Einrichtung, auf den aktuellen Software-Stand gebracht sind, unnötig informiert werden.

Mit Hilfe einer datenübertragungsfähigen Kommunikationseinrichtung im Kraftfahrzeug (fahrzeuginterne Service-Schnittstelle) ist es möglich, einen aktuellen Stand aller im Kraftfahrzeug ab Werk verbauten und/oder nachträglich in einer Werkstatt getauschten und/oder aktualisierten Hard- und Software-Komponenten (Fahrzeugkonfigurationsinformation) nach dessen Ermittlung (durch eine Zustandsermittlungs-Vorrichtung) an ein so genanntes Backend-System (fahrzeugexterne Service-Einrichtung) zu übertragen. Da der aktuelle Kraftfahrzeugstand (SW, HW und gegebenenfalls relevante Fehlerspeicher, etc.) sich sehr oft von den ursprünglich werksseitig verbauten SW-und HW-Komponenten unterscheidet, ist es sinnvoll, einen solchen Datenabgleich in regelmäßigen Abständen vorzunehmen.

Sobald die Kraftfahrzeugdaten im Backend-System empfangen werden, kann individuell für das jeweils aktuell mit dem Backend verbundene Kraftfahrzeug eine Überprüfung stattfinden, ob für dieses Kraftfahrzeug neue - optionale oder pflichtige - Updates vorhanden sind. Aufgrund der "on-time" Überprüfung der empfangenen Kraftfahrzeugdaten kann sichergestellt werden, dass die Updateprozesse nur dann für das jeweilige Kraftfahrzeug ausgelöst werden, wenn es tatsächlich betroffen ist.

Es werden beispielhaft folgende Einzelschritte zur praktischen Umsetzung der oben allgemein beschriebenen Lösung vorgeschlagen (vgl. Ablaufdiagramm in Fig. 1):
1. Ein Kraftfahrzeug meldet sich kommunikationstechnisch, drahtlos in regelmäßigen Zeitabständen, d.h. zeitbasiert (gegebenenfalls aber auch ereignisbasiert), bei einer Kommunikationseinrichtung des Backends an. Das Kraftfahrzeug muss sich dazu nicht in der Nähe des Backend-Systems befinden. Das Backend-System kann eine einzige Recheneinheit oder auch eine Vielzahl, ggf. örtlich verteilter und miteinander vernetzter, Recheneinheiten umfassen (vgl. Block 1 in Fig. 1).
2. Nach einer erfolgreichen Anmeldung wird ein Satz fahrzeugrelevanter Daten, der eine Kraftfahrzeugidentifikationsnummer sowie eine Beschreibung der Kraftfahrzeugkonfiguration, bestehend aus den aktuellen Hard- und Softwarekomponenten und deren Versionen sowie allen Fehlerspeichereinträgen, umfasst, über ein Applikationsprotokoll an das Backend-System übertragen (vgl. Block 2 in Fig. 1).
3. Das Backend-System wertet die empfangenen Daten aus und gleicht diese mit Kompatibilitäts- und Konfigurationsdaten aus Datenbanken im Backend-System ab, um individuell für das angemeldete Kraftfahrzeug zu überprüfen, ob dieses Kraftfahrzeug von einem oder mehreren Updates bzw. Upgrades betroffen ist. Die Überprüfung findet sowohl für optionale, als auch für pflichtige Updates bzw. Upgrades statt (vgl. Block 3 in Fig. 1).
4. Ist ein Update/Upgrade oder gar mehrere Updates/Upgrades für das angemeldete Kraftfahrzeug erforderlich bzw. empfohlen, wird an das Kraftfahrzeug (bzw. dessen fahrzeuginteme Service-Schnittstelle oder eine andere Kommunikationsschnittstelle des Kraftfahrzeugs) eine elektronische Nachricht übermittelt (vgl. Block 4 in Fig. 1).
5. Nachdem diese elektronische Nachricht vom Kraftfahrzeug empfangen wurde, wird der Fahrer des Kraftfahrzeugs im Rahmen eines entsprechenden MMI-Dialogs informiert, dass (und ggf. welche) neue Updates/Upgrades verfügbar sind (vgl. Block 5 in Fig. 1).
6. Der Update-/Upgrade-Prozess wird durch den Fahrer durch ein Bedienkommando im Rahmen des MMI-Dialogs aktiv gestartet (vgl. Block 6 in Fig. 1).

Die Verfahrensschritte gemäß den Blöcken 1, 2 und 3 aus Fig. 1 laufen vorzugsweise periodisch wiederholt ab; die Verfahrensschritte gemäß den Blöcken 4, 5 und 6 aus Fig. 1 werden nur dann durchlaufen, wenn tatsächlich ein Update/Upgrade für das angemeldete Kraftfahrzeug erforderlich bzw. empfohlen ist. Die vom Backend ausgeführte Prüfung gemäß Block 7 veranschaulicht dies. Liegt ein Update/Upgrade vor, werden die Verfahrensschritte gemäß den Blöcken 4, 5 und 6 durchlaufen. Ansonsten besteht der nächste Verfahrensschritt in der Anmeldung gemäß Block 1.

Der Zeitpunkt bzw. die Frequenz der Übertragung kann vorzugsweise vom Backend aus eingestellt werden. In diesem Fall können beispielsweise folgende Senderegeln definiert werden:
- Zeitabhängige Triggerung: Das Fahrzeug meldet sich jeweils nach einer vorgegebenen Zeit beim Backend an und übersendet die genannten Daten.
- Laufleistungsabhängige Triggerung: Das Fahrzeug meldet sich jeweils nach einer vorgegebenen Fahrstrecke beim Backend an und übersendet die genannten Daten.
- Event-Triggerung: bei Eintreten eines zuvor definierten Zustands meldet sich das Fahrzeug beim Backend an (z.B. bei Unterschreiten einer kritischen Batteriespannung).
- Remote-Triggerung: Das Fahrzeug kann vom Backend aus individuell getriggert werden, sich beim Backend anzumelden.

Das wiederholte Anmelden des Fahrzeugs beim Backend und Versenden vorgegebener Daten ans Backend kann als beim Fahrzeug ablaufender Dienst angesehen werden. Ein solcher Dienst kann vorzugsweise von zentraler Seite, d.h. vom Backend aus, an- und ausgeschaltet werden. Gegebenenfalls kann dem Fahrer die Möglichkeit gegeben werden, den Dienst selbst über Bedienmittel im Fahrzeug an- und auszuschalten. Die Aktivierung und Deaktivierung des Dienstes kann eingebettet sein in ein Konzept zur Verwaltung, insbesondere Aktivierung und Deaktivierung mehrerer Dienste bzw. eines ganzen Dienstepakets (beispielsweise "Teleservices" in Fahrzeugen der Anmelderin).

Durch die Umsetzung der oben beschriebenen Lösung können unter anderem folgende Vorteile erzielt werden:
Es wird die Anzahl der über eine softwarebezogene technische Aktion und/oder die Verfügbarkeit eines sonstigen Updates/Upgrades zu informierenden Kraftfahrzeuge reduziert. Auf Grund der "on-time" Überprüfung des tatsächlichen Kraftfahrzeugstandes ist keine diesbezügliche Vorauswahl von Kraftfahrzeugen notwendig.

Es wird der Aufwand zur Verwaltung der betroffenen und/oder potenziell betroffenen Kraftfahrzeuge im Backend reduziert.

Durch den regelmäßigen Abgleich mit Hilfe einer Kommunikationseinrichtung wird die Aktualität der Daten verbessert, die (im Falle einer Speicherung) im Backend betreffend die in den Fahrzeugen einer Fahrzeugflotte verbauten Hard- und Softwarekomponenten vorliegen.

Schließlich wird die Aktualität des Kraftfahrzeug-Softwarestands verbessert, da Updates/Upgrades regelmäßig unabhängig vom Standort des Kraftfahrzeugs durchgeführt werden können, d.h. ohne dass der Fahrer dafür eine Werkstatt aufsuchen muss.

## Patentansprüche

1. Verfahren zur Aktualisierung zumindest einer Softwarekomponente eines Kraftfahrzeugs, umfassend zumindest die Schritte
- Ermittlung von Fahrzeugkonfigurationsinformation, die zumindest die Information umfasst, welche Hardwarekomponenten und/oder welche Softwarekomponenten im konkreten Kraftfahrzeug vorhanden sind, sowie von Identifikationsdaten des betreffenden Kraftfahrzeugs, durch eine Zustandsermittlungs-Vorrichtung,
- Bereitstellen einer drahtlosen Telekommunikationsverbindung zwischen einer fahrzeuginternen Service-Schnittstelle und einer fahrzeugexternen Service-Einrichtung,
- Versenden der von der Zustandsermittlungs-Vorrichtung ermittelten Fahrzeugkonfigurationsinformation und Identifikationsdaten vom Kraftfahrzeug über die Telekommunikationsverbindung an die fahrzeugexterne Service-Einrichtung,
- Prüfung anhand der Fahrzeugkonfigurationsinformation durch die fahrzeugexterne Service-Einrichtung, ob eine oder mehrere Softwarekomponenten gemäß einer bei der fahrzeugexternen Service-Einrichtung verfügbaren Kontrollvorschrift zu aktualisieren ist,
- Bereitstellen einer entsprechenden Aktualisierungsvorschrift durch die fahrzeugexterne Service-Einrichtung und Aktualisierung der zu aktualisierenden Softwarekomponente anhand der Aktualisierungsvorschrift,
wobei
- die Aktualisierung der zu aktualisierenden Softwarekomponente dem Fahrer von der fahrzeugexternen Service-Einrichtung vor ihrer Durchführung angeboten wird,
- die Aktualisierung auf das Angebot hin ausschließlich durch den Fahrer des Kraftfahrzeugs freigebbar ist,
**dadurch gekennzeichnet,**
- **dass** das Versenden der Fahrzeugkonfigurationsinformation sowie der Identifikationsdaten ohne Mitwirkung und/oder Benachrichtigung des Fahrers zeitgesteuert und/oder ereignisgesteuert wiederholt stattfindet und
- **dass** das Kraftfahrzeug hinsichtlich der Periode einer periodischen Zeitsteuerung und/oder hinsichtlich eines Sendezeitpunkts innerhalb der Periode einer periodischen Zeitsteuerung nachträglich über eine drahtlose Verbindung von einer zentralen Servicestelle aus konfiguriert wird.

2. Verfahren nach Anspruch 1, **dadurch gekennzeichnet,**
**dass** das Versenden der Fahrzeugkonfigurationsinformation sowie der Identifikationsdaten über eine abgesicherte Verbindung und/oder in verschlüsselter Form vorgenommen wird.

3. Verfahren nach Anspruch 1 oder 2, **dadurch gekennzeichnet,**
**dass** die Fahrzeugkonfigurationsinformation sowie die Identifikationsdaten nach ihrer Verarbeitung bei der fahrzeugexternen Service-Einrichtung umgehend oder nach Ablauf einer vorgegebenen Zeitspanne selbsttätig gelöscht werden.

4. Verfahren nach einem der Ansprüche 1 bis 3, **dadurch gekennzeichnet,**
**dass** die Identifikationsdaten zumindest eine eindeutige Fahrzeugidentifikationsnummer umfassen.

5. Verfahren nach einem der Ansprüche 1 bis 4, **dadurch gekennzeichnet,**
**dass** neben der Fahrzeugkonfigurationsinformation sowie den Identifikationsdaten weitere Fahrzeugdaten, insbesondere Fehlerspeicherinhalte, an die fahrzeugexterne Service-Einrichtung versendet werden.

6. Verfahren nach einem der Ansprüche 1 bis 5, **dadurch gekennzeichnet,**
**dass** das Versenden der Fahrzeugkonfigurationsinformation sowie der Identifikationsdaten ohne Mitwirkung und/oder Benachrichtigung des Fahrers zeitgesteuert wiederholt stattfindet.

7. Verfahren nach Anspruch 6, **dadurch gekennzeichnet,**
**dass** das Versenden der Fahrzeugkonfigurationsinformation sowie der Identifikationsdaten ohne Mitwirkung und/oder Benachrichtigung des Fahrers zyklisch mit gleich bleibender Periodendauer stattfindet.

8. Verfahren nach einem der Ansprüche 1 bis 5, **dadurch gekennzeichnet,**
**dass** das Versenden der Fahrzeugkonfigurationsinformation sowie der Identifikationsdaten ohne Mitwirkung und/oder Benachrichtigung des Fahrers ereignisgesteuert wiederholt stattfindet.

9. Verfahren nach Anspruch 8, **dadurch gekennzeichnet,**
**dass** als ein auslösendes Ereignis der erstmalige und/oder der wiederholte Anschluss eines bestimmten Zubehörgeräts, insbesondere eines Mobiltelefons, eines Audio-/Video-Players oder eines tragbaren Computers, an das Kraftfahrzeug definiert ist.

10. Verfahren nach einem der Ansprüche 1 bis 9, **dadurch gekennzeichnet,**
**dass** das wiederholte Versenden der Fahrzeugkonfigurationsinformation sowie der Identifikationsdaten aufgrund einer einmaligen MMI-gesteuerten Mitwirkung des Fahrers stattfindet und/oder aufgrund einer gegenüber dem Versenden mit deutlich geringerer Wiederholrate vorzunehmenden MMI-gesteuerten Mitwirkung des Fahrers stattfindet.

11. Verfahren nach einem der Ansprüche 1 bis 10, **dadurch gekennzeichnet,**
**dass** das Versenden der Fahrzeugkonfigurationsinformation, insbesondere bei gegenüber einem vorhergehenden Versendevorgang unveränderter Fahrzeugkonfiguration, in Gestalt eines die Fahrzeugkonfiguration eindeutig kennzeichnenden Identifikations-Codes erfolgt.

## Claims

1. A method for updating at least one software component of a motor vehicle, comprising at least the following steps:
- determining vehicle configuration information, which comprises at least the information regarding which hardware components and/or which software components are provided in the specific motor vehicle, and also identification data of the motor vehicle in question, by means of a status determination device,
- providing a wireless telecommunications link between a service interface inside the vehicle and a service facility outside the vehicle,
- transmitting the vehicle configuration information and identification data determined by the status determination device from the motor vehicle to the service facility outside the vehicle by means of the telecommunications link,
- checking by the service facility outside the vehicle, on the basis of the vehicle configuration information, whether one or more software components should be updated in accordance with an inspection protocol available from the service facility outside the vehicle,
- providing a corresponding update specification by means of the service facility outside the vehicle and updating the software component(s) to be updated on the basis of the update specification,
wherein
- the updating of the software component(s) to be updated is offered to the driver by the service facility outside the vehicle before said updating is executed,
- the updating can be released only by the driver of the motor vehicle in response to the offer,
**characterised in that**
- the transmission of the vehicle configuration information and also the identification data takes place repeatedly in a time-controlled and/or event-controlled manner without interacting with and/or reporting to the driver, and **in that**
- the motor vehicle, with regard to the period of a periodic time control and/or with regard to a transmission point within the period of a periodic time control, is configured retrospectively from a central service point by means of a wireless link.

2. A method according to claim 1, **characterised in that** the transmission of the vehicle configuration information and also of the identification data is performed over a secured link and/or in encrypted form.

3. A method according to claim 1 or 2, **characterised in that** the vehicle configuration information and also the identification data, once processed, are automatically deleted immediately at the service facility outside the vehicle or once a predefined period of time has elapsed.

4. A method according to any one of claims 1 to 3, **characterised in that** the identification data comprise at least one unique vehicle identification number.

5. A method according to any one of claims 1 to 4, **characterised in that,** besides the vehicle configuration information and also the identification data, further vehicle data are transmitted to the service facility outside the vehicle, more especially error memory contents.

6. A method according to any one of claims 1 to 5, **characterised in that** the transmission of the vehicle configuration information and also of the identification data takes place repeatedly in a time-controlled manner without interacting with and/or reporting to the driver.

7. A method according to claim 6, **characterised in that** the transmission of the vehicle configuration information and also of the identification data takes place cyclically with constant period length without interacting with and/or reporting to the driver.

8. A method according to any one of claims 1 to 5, **characterised in that** the transmission of the vehicle configuration information and also of the identification data takes place repeatedly in an event-controlled manner without interacting with and/or reporting to the driver.

9. A method according to claim 8, **characterised in that** the first-time and/or repeated connection of a specific accessory device, more especially a mobile telephone, an audio/video player or a portable computer, to the motor vehicle is defined as a triggering event.

10. A method according to any one of claims 1 to 9, **characterised in that** the repeated transmission of the vehicle configuration information and also of the identification data takes place on the basis of a one-time MMI-controlled involvement of the driver and/or takes place on the basis of an MMI-controlled involvement of the driver that is to be implemented at a much lower repetition rate compared to the transmission.

11. A method according to any one of claims 1 to 10, **characterised in that** the vehicle configuration information, more especially in the case of a vehicle configuration that has not changed from a previous transmission operation, is transmitted in the form of an identification code uniquely characterising the vehicle configuration.

## Revendications

1. Procédé d'actualisation d'au moins un composant de programme d'un véhicule comportant au moins les étapes suivantes consistant à :
- déterminer une information de configuration du véhicule qui comporte au moins l'information indiquant quel composant de circuit et/ou quel composant de programme équipe en pratique le véhicule ainsi que les données d'identification du véhicule concerné par un dispositif de détermination d'état,
- établir une liaison de télécommunication sans fil entre une interface de service interne au véhicule et une installation de service externe au véhicule,
- envoyer l'information de configuration de véhicule déterminé par le dispositif de détermination d'état ainsi que les données d'identification du véhicule par la liaison de télécommunication à l'installation de service externe au véhicule,
- vérifier à l'aide de l'information de configuration de véhicule par l'installation de service externe au véhicule si un ou plusieurs composants de programme sont à actualiser selon une prescription de contrôle disponible dans l'installation de service externe au véhicule,
- établir une prescription d'actualisation correspondante par l'installation de service externe au véhicule et actualiser le composant de programme actualisé en fonction de la prescription d'actualisation,
selon lequel
l'actualisation des composants de programmes à actualiser est proposée au conducteur par l'installation de service externe au véhicule avant l'exécution de cette actualisation,
- l'actualisation est libérée en fonction de l'offre exclusivement par le conducteur du véhicule,
procédé **caractérisé en ce que**
l'envoi de l'information de configuration du véhicule ainsi que les données d'identification sont commandées dans le temps sans l'intervention et/ou l'information du conducteur et/ou sont commandées de manière événementielle, répétitive et,
- le véhicule est configuré en fonction de la période d'une commande de temps périodique et/ou d'un instant d'émission dans la période d'une commande de temps périodique, ensuite par une liaison sans fil par le service central pour la configuration.

2. Procédé selon la revendication 1,
**caractérisé en ce que**
l'envoi de l'information de configuration du véhicule ainsi que des données d'identification se fait par une liaison sécurisée et/ou sous forme cryptée.

3. Procédé selon les revendications 1 ou 2,
**caractérisé en ce que**
l'information de configuration du véhicule ainsi que les données d'identification après leur traitement par l'installation de service externe au véhicule sont effacées automatiquement, immédiatement ou après une durée prédéfinie.

4. Procédé selon l'une des revendications 1 à 3,
**caractérisé en ce que**
les données d'identification comportent au moins un numéro d'identification unique du véhicule.

5. Procédé selon l'une des revendications 1 à 4,
**caractérisé en ce qu'**
à côté de l'information de configuration du véhicule et des données d'identification, on envoie d'autres données du véhicule, notamment le contenu de la mémoire des défauts vers l'installation de service externe au véhicule.

6. Procédé selon l'une des revendications 1 à 5,
**caractérisé en ce que**
l'envoi de l'information de configuration du véhicule ainsi que des données d'identification se fait sans l'intervention et/ou l'information du conducteur, de façon répétée, commandé dans le temps.

7. Procédé selon la revendication 6,
**caractérisé en ce que**
l'envoi de l'information de configuration du véhicule ainsi que les données d'identification se font sans l'intervention et/ou l'information du conducteur, de manière cyclique avec une durée périodique constante.

8. Procédé selon l'une des revendications 1 à 5,
**caractérisé en ce que**
l'envoi de l'information de configuration du véhicule et des données d'identification se font sans l'intervention et/ou l'information du conducteur, de façon répétée avec une commande événementielle.

9. Procédé selon la revendication 8,
**caractérisé en ce que**
comme événement de déclenchement, on définit un appareil audio déterminé, notamment un téléphone mobile, un lecteur audio-vidéo ou un ordinateur portatif pour le véhicule.

10. Procédé selon l'une des revendications 1 à 9,
**caractérisé en ce que**
l'émission répétée de l'information de configuration du véhicule ainsi que les données d'identification se font par une intervention unique du conducteur avec l'extension MMI et/ou d'une intervention du conducteur avec l'extension MMI à effectuer avec un taux de répétitions significativement moindre pour l'envoi.

11. Procédé selon l'une des revendications 1 à 10,
**caractérisé en ce que**
l'envoi de l'information de configuration du véhicule, notamment si cette configuration est inchangée par rapport à un envoi précédent, se fait sous la forme d'un code d'identification caractéristique unique de la configuration de véhicule.
